# EUROPEAN PATENT SPECIFICATION

(11) **EP 4 135 958 B1**
(45) Date of publication and mention of the grant of the patent: **12.11.2025**
(21) Application number: 21789191.0
(22) Date of filing: 13.04.2021
(51) Int. Cl.: B29C 64/135, B28B 17/00, B29C 35/02, B29C 35/08, B29C 41/08, B29C 67/04, B29C 67/06, B29C 70/64, B29C 64/245, B29C 64/129, B29C 64/25, B29C 64/364, B33Y 10/00, B33Y 30/00, B33Y 40/00

(54) **DYNAMIC MICROFABRICATION THROUGH DIGITAL PHOTOLITHOGRAPHY SYSTEM AND METHODS**
DYNAMISCHE MIKROFABRIKATION DURCH DIGITALES PHOTOLITHOGRAPHIESYSTEM UND VERFAHREN
MICROFABRICATION DYNAMIQUE PAR L'INTERMÉDIAIRE D'UN SYSTÈME DE PHOTOLITHOGRAPHIE NUMÉRIQUE ET PROCÉDÉS

(30) Priority: 14.04.2020 US 202063009927 P
(43) Date of publication of application: 22.02.2023
(73) Proprietor: Auxilium Biotechnologies Inc., San Diego, CA 92130 (US)
(72) Inventor: LAZAROVITS, Isac, San Diego, California 92130 (US)
(74) Representative: Mewburn Ellis LLP
(86) International application number: PCT/US2021/027085
(87) International publication number: WO 2021/211586

(56) References cited:
- WO-A1-2013/170311
- US-A1- 2005 280 185
- US-A1- 2017 087 766
- US-A1- 2017 319 358
- US-A1- 2018 126 632
- US-B1- 6 197 575
- US-B1- 6 391 245

## Description

### CROSS-REFERENCE

This patent application claims the benefit of U.S. Provisional Patent Application No. 63/009,927, filed April 14 2020.

### SUMMARY

Provided herein are embodiments of an additive manufacturing system for forming a three-dimensional object, the system comprising: a fluid reservoir to contain a photopolymerizable material; a stage submersible within the fluid reservoir; at least one light source to photopolymerize the photopolymerizable material; one or more spatial light modulators disposed along an optical path of the at least one light source, the plurality of spatial light modulators to project a sequence of two dimensional cross-sections of the three-dimensional object by modulating light from the at least one light source; and a programmable controller for coordinating projection of the sequence of two dimensional cross-sections and movement of the stage to form the three-dimensional object.

In some embodiments, the system further comprises a plurality of optics to focus the two dimensional cross-sections onto an optical plane. In some embodiments, the plurality of spatial light modulators comprises one or more digital micro mirror devices. In some embodiments, the plurality of spatial light modulators comprises one or more liquid crystal devices. In some embodiments, the at least one light source comprises a light emitting diode.

In some embodiments, the stage is moved continuously. In some embodiments, the at least one light source comprises a laser. In some embodiments, the laser is rastered across a plane of the photopolymerizable material coincident with a focal plane of the laser.

In some embodiments, the stage is moved incrementally. In some embodiments, multiple spatial light modulators are used in conjunction with the light source. In some embodiments, the system comprises four spatial light modulators. In some embodiments, the four spatial light modulators are configured such that each spatial light modulator comprises a quadrant of the two-dimensional cross-sections.

In some embodiments, the stage supports a bottom portion of the three-dimensional object. In some embodiments, the plurality of spatial light modulators projects the two dimensional cross-sections of the three-dimensional object onto an optical plane above the stage. In some embodiments, the stage is moved away from the optical plane such that the projected two dimensional cross-sections of the object are incident on photopolymerizable material adjacent to previously formed layers of the object. In some embodiments, the stage moves away from the light source and toward a bottom of the fluid reservoir. In some embodiments, the stage is moves in a continuous motion. In some embodiments, the stage is moved incrementally. In some embodiments, the light source is intermittently activated during formation of the three-dimensional object.

In some embodiments, the system further comprises an enclosure to house at least the fluid reservoir and the stage. In some embodiments, the enclosure comprises an air filtration system, wherein the enclosure and the air filtration system are configured to provide a sterile environment for formation of the three-dimensional object.

The stage comprises a perfusable substrate. In some embodiments, the perfusable substrate is removable. The perfusable substrate comprises one or more through holes. The one or more through holes are configured to align with one or more perfusable lumens provided in an interior of the three-dimensional object.

In some embodiments, the system further comprises a perfusion apparatus, wherein the perfusion apparatus pumps a solution through the three-dimension object. In some embodiments, the perfusion apparatus is further provided to pump the solution through the perfusable substrate. In some embodiments, the solution is a photopolymerizable material. In some embodiments, wherein the solution is a biological solution. In some embodiments, the biological solution comprises cells, cell media, particles, blood, synthetic blood, or a combination thereof. In some embodiments, the cells comprise stem cells, Schwann cells, or a combination thereof. In some embodiments, wherein the perfusion apparatus comprises a peristaltic pump.

In some embodiments, the perfusion apparatus comprises a syringe. In some embodiments, wherein the syringe is pneumatically operated. In some embodiments, pneumatic operation of the syringe is digitally actuated. In some embodiments, digital actuation is carried out by the programmable controller.

In some embodiments, the system further comprises a pump system, wherein the pump system is configured fill the fluid reservoir with the photopolymerizable material. In some embodiments, the pump system is further configured to remove unpolymerized material from the fluid reservoir.

The fluid reservoir comprises a plurality of subreservoirs. In some embodiments, each of the subreservoirs comprises a different photopolymer material. Each of the subreservoirs is coupled to a pump system.

In some embodiments, at least one of the first photopolymerizable material and the second photopolymerizable material comprises photoinitiator that triggers polymerization when illuminated by the light source. In some embodiments, at least one of the first photopolymerizable material and the second photopolymerizable material comprises a quenching component, wherein the quenching component reduces the signal from the light source to prevent over-curing or unintended curing in areas not directly intended to be illuminated. In some embodiments, the quenching component comprises a chemical that acts on free radicals generated by the photoinitiator. In some embodiments, the quenching component comprises a dye that acts to reduce intensity of the light source incident on a focal plane. In some embodiments, at least one of the first photopolymerizable material and the second photopolymerizable material comprises a quenching component, wherein the quenching component reduces the signal from the light source to prevent over-curing or unintended curing in areas not directly intended to be illuminated.

In some embodiments, the system further comprises a perfusion apparatus, wherein the perfusion apparatus pumps the photopolymerizable material through the perfusable substrate. In some embodiments, the perfusion apparatus is further provided to pump the photopolymerizable material through the three-dimension object. In some embodiments, the perfusion apparatus comprises a peristaltic pump. In some embodiments, the perfusion apparatus comprises a syringe. In some embodiments, the syringe is pneumatically operated. In some embodiments, pneumatic operation of the syringe is digitally actuated. In some embodiments, digital actuation is carried out by the programmable controller.

In some embodiments, the photopolymerizable material comprises biological photopolymer materials, synthetic photopolymer materials, or a combination thereof. In some embodiments, the biological photopolymer materials comprise naturally occurring biological materials, synthetically modified biological materials, or a combination thereof. In some embodiments, the synthetically modified biological photopolymer materials comprise one or more acrylic groups. In some embodiments, the synthetically modified biological photopolymer materials comprise methacrylated gelatin, methacrylated hyaluronic acid, methacrylated alginate, polyethylene-glycol diacrylate, acrylated caprolactone, or a combination thereof. In some embodiments, the synthetically modified biological photopolymer materials comprise polyethylene-glycol containing between one and four acrylic groups. In some embodiments, the photopolymerizable material comprises cell adhesion ligands and chemical cues that direct cell migration and proliferation. In some embodiments, the cell adhesion ligands can include RGD peptide sequences.

Provided herein are embodiments of a method for forming a three-dimensional object comprising: (a) submersing a substrate within a photopolymerizable material and adjacent to a focal plane; (b) projecting a first cross-section of the three-dimensional object on the focal plane and incident on the photopolymerizable material to polymerize a first layer of the three-dimensional object; (c) moving the substrate away from the focal plane; (d) projecting a subsequent cross-section of the three-dimensional object on the focal plane and incident on the photopolymerizable material to polymerize a subsequent layer of the three-dimensional object, wherein the subsequent layer is coupled to a preceding layer of the three-dimensional object; and (e) repeating (c) and (d) until the three-dimensional object is formed from the photopolymerizable material.

Provided herein are embodiments of method for forming a three-dimensional object comprising: (a) submersing a substrate within a first photopolymerizable material and adjacent to a focal plane; (b) projecting at least portion of a first cross-section of the three-dimensional object on the focal plane and incident on the first photopolymerizable material to polymerize a first layer of the first photopolymerizable material; (c) moving the substrate away from the focal plane; (d) projecting at least a portion of a subsequent cross-section of the three-dimensional object on the focal plane and incident on the first photopolymerizable material to polymerize a subsequent layer of the first photopolymerizable material, wherein the subsequent layer is coupled to a preceding layer; and (e) repeating (c) and (d) until a first body of the three-dimensional object is formed from the first photopolymerizable material.

In some embodiments, the method further comprises a step of removing unpolymerized first photopolymerizable material from the first body. In some embodiments, the method further comprises the steps of: (f) adding a subsequent photopolymerizable material to the first body; (g) projecting at least a portion of a cross-section of the three-dimensional object on the focal plane and incident on the subsequent photopolymerizable material to polymerize a first layer of subsequent photopolymerizable material, wherein the first layer of subsequent photopolymerizable material is coupled to either the substrate or the first body; (h) moving the substrate; (i) projecting at least a portion of a subsequent cross-section of the three-dimensional object on the focal plane and incident on the subsequent photopolymerizable material to polymerize a subsequent layer of the subsequent photopolymerizable material, wherein the subsequent layer is coupled to a preceding layer of the subsequent photopolymerizable material or the first body; and (j) repeating (h) and (i) until a subsequent body of the three-dimensional object is formed from the subsequent photopolymerizable material. In some embodiments, (f) to (j) are performed to form the three-dimensional object.

Provided herein are embodiments of a method for forming a three-dimensional object comprising:(a) submersing a substrate within a first photopolymerizable material and adjacent to a focal plane; (b) projecting at least portion of a first cross-section of the three-dimensional object on the focal plane and incident on the first photopolymerizable material to polymerize a first layer of the first photopolymerizable material; (c) moving the substrate away from the focal plane; (d) projecting at least a portion of a subsequent cross-section of the three-dimensional object on the focal plane and incident on the first photopolymerizable material to polymerize a subsequent layer of the first photopolymerizable material, wherein the subsequent layer is coupled to a preceding layer; and (e) repeating (c) and (d) until a first body of the three-dimensional object is formed from the first photopolymerizable material.

In some embodiments, the method further comprises a step of removing unpolymerized first photopolymerizable material from the first body. In some embodiments, the method further comprises a step of providing perfusable lumens within an interior of the first body. In some embodiments, the method further comprises the steps of: (f) adding a second photopolymerizable material to the first body; (g) projecting at least a portion of a cross-section of the three-dimensional object on the focal plane and incident on the second photopolymerizable material to polymerize a first layer of second photopolymerizable material, wherein the first layer of second photopolymerizable material is coupled to either the substrate or the first body; (h) moving the substrate; (i) projecting at least a portion of a subsequent cross-section of the three-dimensional object on the focal plane and incident on the second photopolymerizable material to polymerize a subsequent layer of the second photopolymerizable material, wherein the subsequent layer is coupled to a preceding layer of the second photopolymerizable material or the first body; and (j) repeating (h) and (i) until a second body of the three-dimensional object is formed from the second photopolymerizable material.

The document US 2017/319358 A1 discloses a device that comprises a reaction vessel and a light source, which is arranged such that during operation of the device, it can irradiate light into the reaction vessel, wherein this light is focused on a focal plane inside the reaction vessel. The device further comprises a reservoir for different photopolymerizable liquids. Furthermore, a pump is provided that can be brought into fluid communication with both the reservoir and the reaction vessel.

### BRIEF DESCRIPTION OF THE DRAWINGS

The novel features of the invention are set forth with particularity in the appended claims. A better understanding of the features and advantages of the present invention will be obtained by reference to the following detailed description that sets forth illustrative embodiments, in which the principles of the invention are utilized, and the accompanying drawings of which:
**FIG. 1** depicts a dynamic microfabrication system, according to some embodiments.
**FIG. 2** depicts a dynamic microfabrication system, according to some embodiments.
**FIG. 3** shows a flow chart depicting a sample print sequence, according to some embodiments.
**FIG. 4** shows a flow chart depicting a sample perfusion sequence, according to some embodiments.
**FIG. 5** depicts an DLP based printing system, according to some embodiments
**FIG. 6** depicts an SLA based printing system, according to some embodiments.
**FIG. 7** depicts a dynamic microfabrication system, according to some embodiments.

### DETAILED DESCRIPTION

Provided herein are systems and methods of dynamic microfabrication using digital photolithography. In some embodiments, the system and methods of dynamic microfabrication using digital photolithography are provided to fabricate a three-dimensional object using additive manufacturing methods.

In some embodiments, the system and methods are provided to manufacture biomimetic structures or medical implants to be grafted, transplanted, or otherwise inserted into a living structure or a patient in need thereof. In some embodiments, the biomimetic structure may be a biomimetic scaffold for promoting neural tissue growth and proliferation in a subject. In some embodiments, the biomimetic structure may be a biomimetic blood vessel for replacement or repair of a damaged blood vessel or blood lumen. The subject may be an animal with a complex nerve system, such as a mammal, like a human, primate, or companion animal. The tissue scaffolds according to the present disclosure may thus be devices implanted in such a subject.

The printed medical implants may assist in restoring bodily function. The function can be restored in a mammal that can include a human, a horse, a pig, a cow, a bull, a goat, a sheep, a dolphin, a dog, a cat, a camel, or the like. In one embodiment, the mammal is a human. These medical implants can be used in some embodiments to promote axonal regeneration after spinal cord or peripheral nerve injury. In some embodiments, the three-dimension printed medical implants comprise stem cells. These implants can be custom designed to fit a particular patient's anatomy.

In some embodiments, a scaffold of the desired length is 3D-printed and then placed in the injury site. The proximal and distal nerve stumps are then inserted into the overhangs of the scaffold where they are aligned to the microchannel scaffold. The nerve epineurium is then sutured to the overhang or sheath, thus fixing the scaffold in place. Regenerating axons from the proximal side enter the scaffold and are guided through the injury site to the distal nerve stump. In some embodiments, the channels of the scaffold are filled with Schwann cells or stem cells via a perfusion apparatus to further support axonal regeneration.

In some embodiments, the fabrication system is configured to fabricate biomimetic scaffolds comprising a plurality of microchannels respectively defining a longitudinal major axis. In accordance with certain variations of the present disclosure, a "microchannel" preferably has at least one spatial dimension that is less than about 1,000 µm. In certain aspects, each microchannel has an inner diameter of greater than or equal to about 10 µm to less than or equal to about 1,000 µm, optionally greater than or equal to about 10 µm to less than or equal to about 500 µm, optionally greater than or equal to about 50 µm to less than or equal to about 450 µm, optionally greater than or equal to about 50 µm to less than or equal to about 300 µm.

In certain aspects, the microchannels may be treated with a biofunctional agent or active ingredient; have different surface properties or surface roughness; or have surfaces with different moieties exposed, which can be useful in designing spatially guided cellular growth and in certain aspects to facilitate adhesion of cells or tissue or to promote release of biofunctional agents, which include biofunctional materials and active ingredients (e.g., pharmaceutical active ingredients), and the like, into the surrounding environment.

The biodegradable material forming the microchannel may dissolve, referring to physical disintegration, erosion, disruption and/or dissolution of a material and may include the resorption of such material by a living organism. In certain variations, biodegradable polymeric material may dissolve or erode upon exposure to a solvent comprising a high concentration of water, such as blood, serum, growth or culture media, bodily fluids, saliva, and the like. Thus, upon implantation, the material may dissolve or disintegrate into small pieces. For structural scaffold members, the dissolution rate (e.g., a rate at which the structural member is resorbed by surrounding cells) can be designed so that sufficient cellular growth occurs prior to the structure dissolving or disintegrating via the resorption process. In various embodiments, the tissue scaffold device is designed to have a degradation time or dissolution rate that coincides with an amount of time that permits adequate neural tissue regrowth through the scaffold to a target tissue in the subject. Depending upon the subject and the time needed for recuperation and regeneration of the tissue, by way of non-limiting example, the degradation time may be greater than or equal to about 1 month to less than or equal to about 3 years, greater than or equal to about 1 month to less than or equal to 1 year, and in certain variations, greater than or equal to about 1 month to less than or equal to 6 months. In this manner, the cellular scaffold structure supports and promotes cell growth, cell proliferation, cell differentiation, cell repair, and/or cell regeneration in three-dimensions, especially for neural tissue growth.

In some embodiments, a three-dimensional objects described herein can be fabricated using microscale continuous projection 3D printing (µOPP). Microscale continuous projection printing can fabricate complex 3D architectures with a variety of biomaterials and cells. Printing may be accomplished without scanning in both X and Y directions (in contrast to nozzle-based approaches). Thus, 3D objects can be fabricated in one continuous print in the Z direction. In some embodiments, only seconds may be required to print an entire object. In some embodiments, an object can be printed in about 1 second, about 2 seconds, less than about 2 seconds, less than about 3 seconds, less than about 4 seconds, less than about 5 seconds, less than about 10 seconds, less than about 20 seconds, or less than about 30 seconds. In some embodiments, about only 1.6 seconds is required to print an entire 2 mm biomimetic implant. This print rate represents a rate about 1,000 times faster than traditional nozzle printers.

Using focused light for polymerization generates printing resolution of 1 µm, a 50- fold improvement over nozzle-based inkjet printers. In inkjet or extrusion-based approaches, mechanical integrity may be compromised by artificial interfaces between the drops or lines and can cause mechanical failure during or after in vivo application. By providing layerless resolution in the Z direction, the structures may not exhibit these planar artifacts (interfaces) induced by a movement of a linear stage to a new position. Thus, systems and methods described herein can improve mechanical integrity of 3D printed implants and offer rapid fabrication of complex 3D biomimetic structures at microscale resolution.

In some embodiments, a printed biomimetic implant is printed in a single portion for implantation at a site of spinal cord transection or a peripheral nerve injury. In some embodiments, the implant is printed in two or more portions whereby a damaged, but not transected, spinal cord, or peripheral nerve, can be treated with an implant disclosed herein. If the spinal cord injury (SCI), or peripheral nerve injury, is not a transection, the one or more portions of the implant can be implanted surrounding the surviving tissue and the portions adhered to each other using a biologically acceptable adhesive. Thus, any surviving tissue can be maintained and regeneration of the host spinal cord, or peripheral nerve, encouraged at the injury site.

An implant may be customized for each patient. Upon imaging of a patient spinal cord, or peripheral nerve, injury a 3D model is created using CAD software. This model is then used to print a patient specific implant that fit and fill the lesion. In some embodiments, post-processing systems and methods to treat a fabricated biomimetic implant can increase the likelihood that the implant will be accepted by the body of which it is implanted into.

### I. ADDITIVE FABRICATION SYSTEM

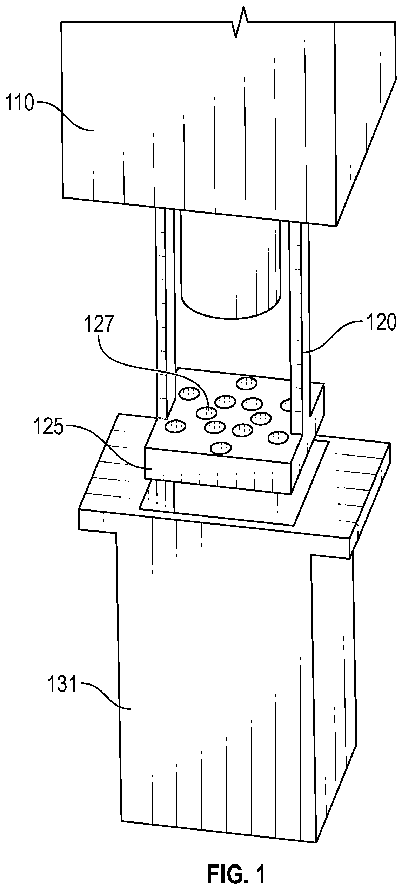

In some embodiments, a fabrication system is provided for dynamic microfabrication of a three-dimensional object by digital photolithography additive manufacturing methods. With reference to FIG. 1, an embodiment of a fabrication system is shown. In some embodiments, the fabrication system includes a light projector 110 positioned above a fluid reservoir 131 with a movable stage 125 provided on a printer frame 120. In some embodiments, the printer frame comprises and actuation system used to lower and/or raise the movable stage when the stage is coupled to the frame.

The light projector 110 includes at least one light source configured to project patterned light towards the fluid reservoir 131. In some embodiments, the fluid reservoir is configured to contain a volume of photopolymerizable material. Light may be emitted from the projector with sufficient energy and intensity to polymerize a liquid solution of photoactive monomers.

In some embodiments, the light emitted from the projector is comprised of ultraviolet (UV) spectrum wavelengths to activate the photopolymerizable materials to initiate cross-linking of the polymers. In some embodiments, UV wavelengths are considered as electromagnetic radiation with a wavelength from 10 nanometers (nm), with a corresponding frequency of approximately 30 petahertz (PHz), to 400 nm, with a corresponding frequency of 750 terahertz (THz). In other embodiments, the light emitted from the projector is comprised of blue spectrum wavelengths.

In some embodiments, the photopolymerizable materials comprise biologically acceptable polymers. In some embodiments, the polymer can include polyethylene glycol based polymers such as, but not limited to polyethylene glycol diacrylate (PEGDA) and poly(ethyelene glycol) diacrylate. In some embodiments, the polymer can include gelatin methacrylol (GelMA) hydrogels. In some embodiments, the polymers can include combinations of polyethylene glycol diacrylate, poly(ethyelene glycol) diacrylate, and gelatin methacrylol. In some embodiments, the polymers can include combinations of polyethylene glycol diacrylate and gelatin methacrylol. In some embodiments, the polymers can include combinations of poly(ethyelene glycol) diacrylate and gelatin methacrylol.

In some embodiments, the fabrication system utilizes a top-down approach, wherein the light source is positioned above the fluid reservoir 131 filled with polymerizable material. A plurality of optics is coupled to the light projector and configured to focus light from the projector onto a plane. The incident plane may be perpendicular to the direction at which light is emitted from the projector 110. The stage or build plate 125 is submersible within the fluid reservoir 131. In some embodiments the stage is positioned just below the incident plane which light from the projector is focused on. In some embodiments, the projector illuminates a thin layer of photo-active material sitting on top of the stage at the incident plane. After polymerizing the layer, the stage descends into the photopolymer reservoir and allows another layer of fluid to sit atop the first layer. The next layer of fluid is then exposed to light from the projector to form a successive layer of the 3D object being manufactured. This process repeats for all layers of the object, where each layer corresponds to the object's desired cross section.

In some embodiments, actuation system of the printer frame raises the stage slightly after lowering it towards the bottom of the fluid reservoir to control the thickness of the next layer to be formed. This procedure may ensure that photopolymerizable material is present on top of the previously formed layer. In some embodiments, the plane formed by the top surface of the stage is parallel to the incident plane which light from the projector 110 is focused onto.

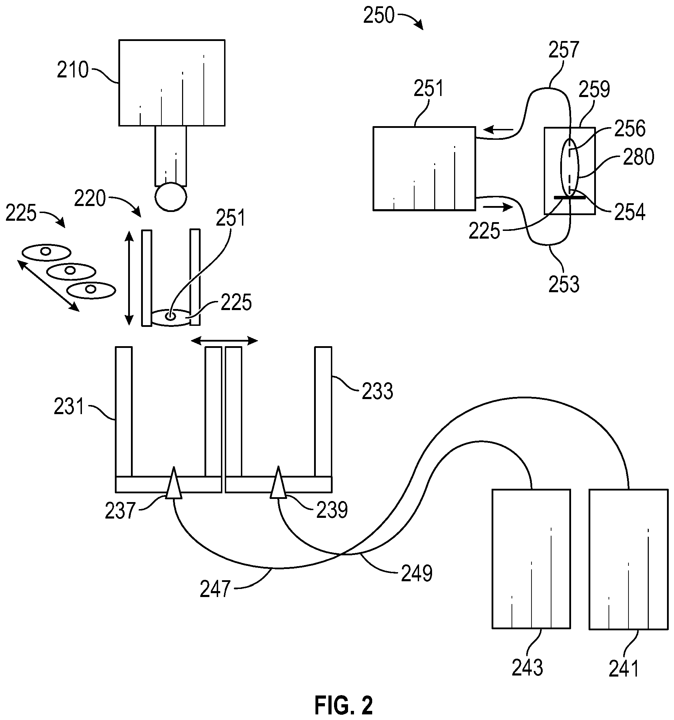

A further embodiment of a dynamic microfabrication system is depicted by FIG. 2. In some embodiments, the fabrication system comprises a light projector 210 positioned above a fluid reservoir 231 with a movable stage 225 provided on a printer frame 220. In some embodiments, the printer frame comprises and actuation system used to lower and/or raise the movable stage when the stage is coupled to the frame.

In some embodiments, the movable stage is raised or lowered up to 10 centimeters (cm). In some embodiments, the range of movement of the movable stage is about 5 cm to about 20 cm. In some embodiments, the range of movement of the movable stage is about 5 cm to about 7 cm, about 5 cm to about 10 cm, about 5 cm to about 15 cm, about 5 cm to about 20 cm, about 7 cm to about 10 cm, about 7 cm to about 15 cm, about 7 cm to about 20 cm, about 10 cm to about 15 cm, about 10 cm to about 20 cm, or about 15 cm to about 20 cm. In some embodiments, the range of movement of the movable stage is about 5 cm, about 7 cm, about 10 cm, about 15 cm, or about 20 cm. In some embodiments, the range of movement of the movable stage is at least about 5 cm, about 7 cm, about 10 cm, or about 15 cm. In some embodiments, the range of movement of the movable stage is at most about 7 cm, about 10 cm, about 15 cm, or about 20 cm.

In some embodiments, the movable stage is capable of moving in increments of about 1 micron. In some embodiments, the movable stage is capable of moving in increments of about 0.001 microns to about 10 microns. In some embodiments, the movable stage is capable of moving in increments of about 0.001 microns to about 0.01 microns, about 0.001 microns to about 0.1 microns, about 0.001 microns to about 0.5 microns, about 0.001 microns to about 1 micron, about 0.001 microns to about 2 microns, about 0.001 microns to about 5 microns, about 0.001 microns to about 10 microns, about 0.01 microns to about 0.1 microns, about 0.01 microns to about 0.5 microns, about 0.01 microns to about 1 micron, about 0.01 microns to about 2 microns, about 0.01 microns to about 5 microns, about 0.01 microns to about 10 microns, about 0.1 microns to about 0.5 microns, about 0.1 microns to about 1 micron, about 0.1 microns to about 2 microns, about 0.1 microns to about 5 microns, about 0.1 microns to about 10 microns, about 0.5 microns to about 1 micron, about 0.5 microns to about 2 microns, about 0.5 microns to about 5 microns, about 0.5 microns to about 10 microns, about 1 micron to about 2 microns, about 1 micron to about 5 microns, about 1 micron to about 10 microns, about 2 microns to about 5 microns, about 2 microns to about 10 microns, or about 5 microns to about 10 microns. In some embodiments, the movable stage is capable of moving in increments of about 0.001 microns, about 0.01 microns, about 0.1 microns, about 0.5 microns, about 1 micron, about 2 microns, about 5 microns, or about 10 microns. In some embodiments, the movable stage is capable of moving in increments of at least about 0.001 microns, about 0.01 microns, about 0.1 microns, about 0.5 microns, about 1 micron, about 2 microns, or about 5 microns. In some embodiments, the movable stage is capable of moving in increments of at most about 0.01 microns, about 0.1 microns, about 0.5 microns, about 1 micron, about 2 microns, about 5 microns, or about 10 microns.

In some embodiments, the stage 225 is removable from the printer frame 220. In some embodiments, multiple stages are queued to be loaded into the printer frame. Loading of the stage into the printer frame may be accomplished by and automated system. In such embodiments, the removable stage allows for a fabricated object, built upon the removable stage, to be removed from the fabrication system and relocated for post-processing. For example, a fabricated object and removable stage may be removed from the printer frame and placed in the perfusion apparatus 250 to begin the perfusion sequence. The fabrication system is then able to continue production of fabricated objects while the first fabricated object undergoes perfusion. This system may allow for reduced production time for fabrication of multiple 3D objects.

In some embodiments, a first fluid reservoir 231 and a second fluid reservoir 233 are provided as part of the fabrication system. In some embodiments, fluid reservoirs 231, 233 are provided on a movable stage. In some embodiments, the stage and partially fabricated 3D object are removed from the first reservoir 231 after completion of first print sequence. The stage may then move to be positioned underneath the print frame and a second sequence within the second reservoir may be initiated.

According to the invention, more than one fluid reservoir is utilized. FIG. 2 depicts an embodiment which utilizes two fluid reservoirs 231, 233. Each reservoir may contain a different photopolymerizable material or other solution to be utilized during fabrication. In some multiple fluid reservoir embodiments, some of the fluid reservoirs may comprise the same solution. In some embodiments, the fluid reservoir may be considered as a combination of multiple reservoirs, and each individual reservoir (e.g. 231 and 233) may be considered as a subreservoir or subcomponent of the fluid reservoir.

The fabrication system further comprises a pump system. The pump system may comprise one or more pumps 241, 243 having fluid reservoirs contained within. Each pump may be connected to a single fluid reservoir. As depicted in FIG. 2, a first pump 241 is connected to the first fluid reservoir 231 via a first fluid line 247 and first reservoir interface 237, such that the first pump 241 is in fluid communication with the first fluid reservoir231. A second pump 243 may be connected to the second fluid reservoir 233 via a second fluid line 249 and second reservoir interface 239, such that the second pump 243 is in fluid communication with the second fluid reservoir 233.

In some embodiments, the first pump 241 and first interface 237 are configured to fill to the first fluid reservoir 231 with a solution contained within a reservoir of the first pump 241. In some embodiments, the first pump 241 and first interface 237 are configured to remove a solution from the first fluid reservoir 231 and transport the solution to a reservoir within the first pump 241.

In some embodiments, the second pump 243 and second interface 239 are configured to fill to the second fluid reservoir 233 with a solution contained within a reservoir of the second pump 243. In some embodiments, the second pump 243 and second interface 239 are configured to remove a solution from the second fluid reservoir 233 and transport the solution to a reservoir within the second pump 243.

In some embodiments, the fluid pumps 241, 243 comprise more than one reservoir to store more than one solution. In some embodiments, while the 3D object is being fabricated in one reservoir, the pump system removes and fills solution in the reservoir not being utilized for fabrication. In an example wherein fluid reservoirs are utilized, each reservoir being connected to a pump system, a first print sequence may be complete within a first reservoir 231 wherein the first print sequence utilizes a first photopolymerizable material. After completion of the first sequence, the partially fabricated 3D object may be transferred to the second reservoir 233 to undergo a second print sequence. As the second print sequence is underway, a pump system may remove the first photopolymerizable material from the first reservoir 231, then fill the first reservoir with a different solution or photopolymerizable material. Once the second print sequence is complete, the first reservoir will then be ready, such that the object being fabricated can be transferred back to the first reservoir to begin a new processing stage within the first reservoir. Although the example is provided with two reservoirs, it is possible to conduct similar processing with any embodiment wherein more than one fluid reservoir is provided. The processing method allows for little delay between processing steps taking place with different solution to reduce overall production time of a 3D object being fabricated.

There is more to be gained by incorporating multiple materials in a given build sequence. Different materials exhibit different physical, chemical, or biological properties that may be suitable for certain parts of an object (but not others), and these additional materials may contain components (such as cells or particles) that are desired in preselected areas of that object. The combination of multiple materials in a single build sequence may allow for heterogeneous constructs to be fabricated that may serve more utility than its homogenous counterpart. In some embodiment, different reservoirs can be part of the same fabrication apparatus, where the build plate or build stage can alternate from one reservoir to another as is appropriate to create that section of the object. In some embodiments, the different materials may be contained in separate containers connected to the same reservoir. In such examples, the material options can be pumped in or pumped out as directed by the controlling software.

In some examples, wherein a biomimetic scaffold is being fabricated, different photopolymerizable materials used may differ to form a core and a shell. The photopolymerizable material composition of the core may be analogous to the "grey matter" portion of the normal spinal cord and photopolymerizable material composition of the shell may be analogous to the "white matter" portion of the normal spinal cord.

In some embodiments, the fabrication system utilizes multiple spatial light modulators in conjunction with one or more light sources. This allows for the selective exposure of a much larger area on the focal plane and therefore allows much larger layer areas to be fabricated throughout a given build sequence. In some embodiments, the multiple spatial light modulators each form a section of the projected two-dimensional cross-sections of the 3D object to be fabricated.

In some embodiments, the system for the microfabrication of objects includes the continuous motion of the stage through the photopolymer reservoir. Such a configuration allows objects to be created without layers, decreasing fabrication times, and provides isotropic mechanical properties and smooth features along the structure of the newly fabricated object.

In some embodiments, the system for the microfabrication of objects allows for the light source to be turned on and off throughout a given print sequence ("blinking"). When coordinated with the incremental motion of the stage through the photopolymer reservoir, this allows layers of precise thicknesses to be created without the threat of over-curing the photopolymer solution. The advantages become especially apparent when the light source used is a laser with very fast blinking or pulsing capabilities. When combined with very precise incremental motion of the stage, such embodiments allow very fine structures to be created that most closely approximate the intended structures designed and displayed by the spatial light modulators.

### II. DIGITAL LIGHT PROJECTOR

In some embodiments, the light source is a divergent light source. The divergent light source may be comprised of a light emitting diode (LED) or a plurality of LEDs. In some embodiments, other divergent light sources are utilized. In some embodiments, the light projector 110, 210, 510 is a digital light projector which utilizes a liquid crystal panel or digital micromirror array to create a digital photomask.

Digital light processing (DLP) methods may allow the user to digitally control an array of micromirrors to expose an entire plane of photo-active material at once. By programming each micromirror individually, a user can selectively expose the layer of photoactive material to a predefined pattern with a spatial resolution corresponding to the individually programmed pixels (micromirrors). An entire three-dimensional object may be fabricated through the incremental motion of a stage coordinated with the successive exposure of multiple two-dimensional polymerized layers.

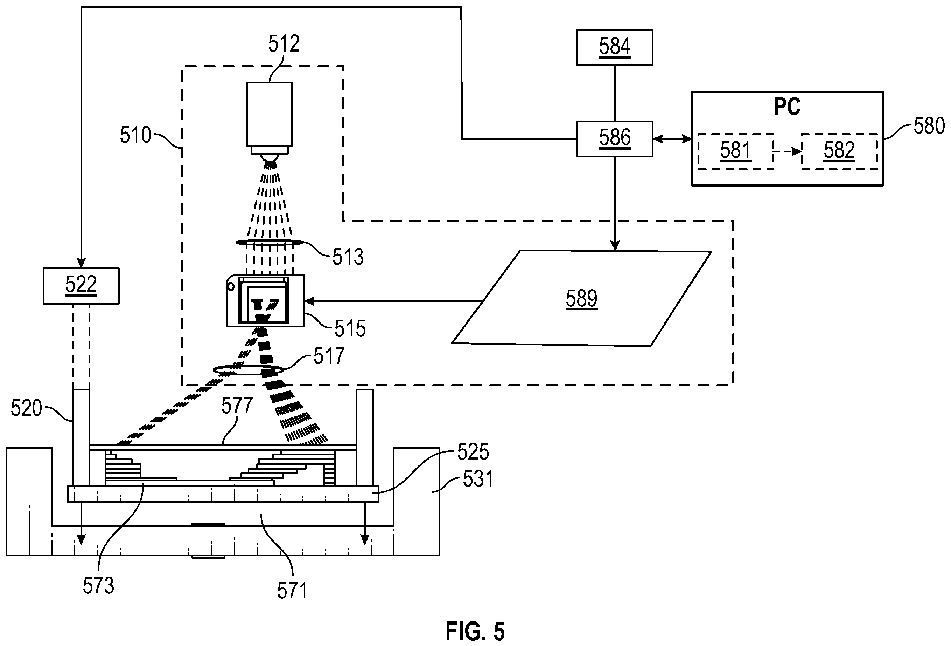

FIG. 5 depicts an example embodiment of a digital light projector system which may be utilized as the light projector in the additive fabrication system. In some embodiments, the system comprises a computing device 580. The computer assisted design model (CAD) 581 may be loaded onto the computing device. The CAD model 581 may be stored in a memory of the computing device which may include an internal data storage system or an external data storage system. In some embodiments, the computing device may include an installed 3D printing software 582. The 3D printing software may comprise a graphical user interface (GUI). In some embodiments, the 3D printing software analyzes the loaded 3D object to be fabricated and initializes cross-sections of the 3D object for a printing sequence. In some embodiments, the thickness and/or point at which each cross-section is formed is dependent upon a desired tolerance set by the user.

In some embodiments, a programable micro controller unit (MCU) 586 is provided as an interface to external components of the computing device. In some embodiments, a user interacts with the computing device 580 and manipulate the model via a user interface 584 which connects to the computing device via the MCU 586. In some embodiments, the 3D printing software allows the user to choose the orientation of the object to be fabricated relative to the stage 525. The MCU 586, may also connect to the stepper motor 522 which actuates the printer frame 520 to raise or lower the stage 525 relative to the fluid reservoir 531.

In some embodiments, the MCU 586 connects the computing device to the controller 589 of the digital light projector (DLP). In some embodiments, the DLP controller 589 sends pattern data and a clocking pulse to the digital micromirror device (DMD) 515 to activate specific micro mirrors, manipulating light from the light source 512 to project the pattern of the two-dimensional cross-section for the 3D object being fabricated. In some embodiments, an analog DMD control is provided, wherein the analog control converts the digital signal from the digital controller 589 prior to sending the signal to the DMD 515.

In some embodiments, the DMD 515 is replaced by a liquid crystal display (LCD) screen. Similar to embodiments using a DMD, the LCD is manipulated by controller 589 to project two-dimensional cross-sections of the 3D object being fabricated.

In some embodiments, the light projector 510 further comprises a collimating optical system 513 comprised of one or more optical lenses to collimate light from the light source 512 onto the digital micromirror device or liquid crystal display 515. In some embodiments, the light projector 510 further comprises a focal optical system 517 comprised of one or more optical lenses to focus a light pattern emitted by the digital micromirror device or LCD 515 onto an incident plane 577.

In some embodiments, the incident plane 577 is provided within a fluid reservoir 531 such that the light pattern representing a two-dimensional cross-section of the object being fabricated is incident on unpolymerized material 571 provided within the fluid reservoir. Upon exposure to the patterned light, the photopolymerizable material begins cross-linking and solidifying to form a layer of the 3D object being fabricated. In some embodiments, after exposure of the projected light pattern, the MCU 586 outputs a signal to the stepper motor 522, such that the printer frame 520 and stage 525 are lowered. The previously polymerized layer of the 3D object being fabricated is then further submerged within the photopolymerizable material and the next cross-sectional pattern is emitted onto the incident plane 577. This process is repeated until at least a first portion of the 3D object being fabricated is formed. In some embodiments, the stepper motor 522 continuously lowers the stage 525 into the fluid reservoir as the digital micromirror device or LCD 515 is continuously varied to emit the light pattern of the appropriate two-dimensional cross-section. In such embodiments, continuous polymerization allows for the 3D object to be produced with a high tolerance and little to no separation between the two-dimensional cross-sections.

In some embodiments, the invention combines multiple light projectors to create an incident plane having a larger surface area than possible with a single light projector. In some embodiments, four light projectors are used to produce the two-dimensional cross section patterns of the 3D object being fabricated, wherein each projector comprises a quadrant of the pattern. In some embodiments, a single light projector is used having multiple digital micromirror devices or liquid crystal displays to create an incident plane having a larger surface area than possible with a single DMD or LCD. In some embodiments, four DMDs or LCDs are used to produce the two-dimensional cross section patterns of the 3D object being fabricated, wherein each DMD or LCD comprises a quadrant of the pattern.

### III. STEREOLITHOGRAPHY

In stereolithography (SLA), the light source is in the form of a focused laser that is rastered across a plane of the photoactive material coincident to the laser's focal point. Using a computer to control the motion and activation of the laser, a predetermined two-dimensional pattern can be selectively polymerized from the photo-active solution onto the stage. By coordinating the incremental motion of the stage along an axis orthogonal to the plane of polymerization, an entire three-dimensional object can be fabricated through the sequential polymerization of multiple two dimensional layers.

In some embodiments, the setup is similar to the depiction shown in FIG. 5, however the light source 512 is a laser light source and the DMD or LCD is replaced by one or more scanning mirrors or galvanometers used to reflect the laser across the incident plane to polymerize the photopolymerizable material provided in the reservoir 531.

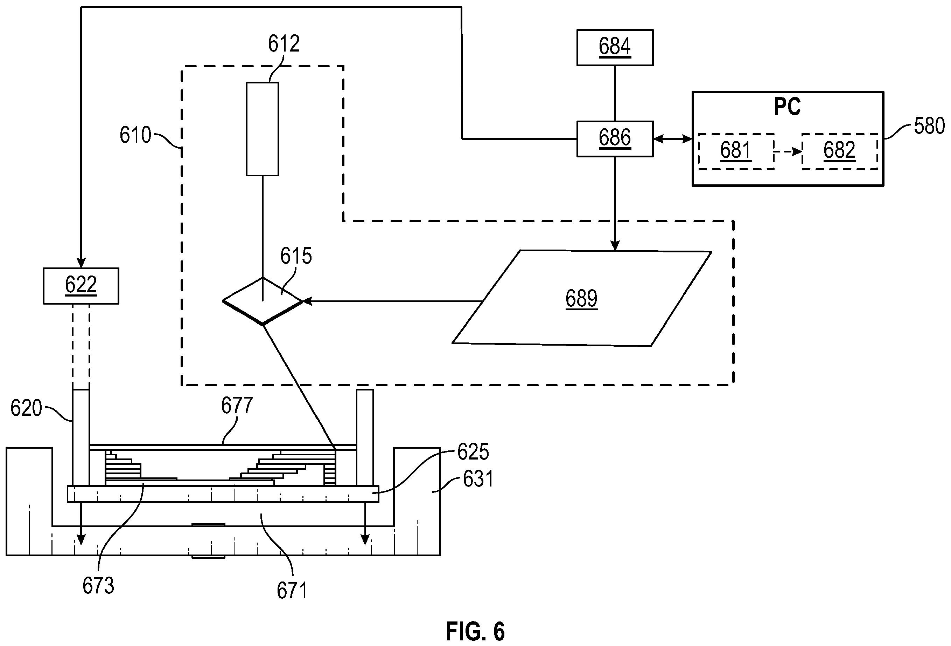

FIG. 6 depicts an example embodiment of a stereolithography apparatus (SLA) which may be utilized as the light projector in the additive fabrication system. In some embodiments, the system comprises a computing device 680. The computer assisted design model (CAD) 681 may be loaded onto the computing device. The CAD model 681 may be stored in a memory of the computing device which may include an internal data storage system or an external data storage system. In some embodiments, the computing device may include an installed 3D printing software 682. The 3D printing software may comprise a graphical user interface (GUI). In some embodiments, the 3D printing software analyzes the loaded 3D object to be fabricated and initializes cross-sections of the 3D object for a printing sequence. In some embodiments, the thickness and/or point at which each cross-section is formed is dependent upon a desired tolerance set by the user.

In some embodiments, a micro controller unit (MCU) 686 is provided as an interface to external components of the computing device. In some embodiments, a user interacts with the computing device 680 and manipulate the model via a user interface 684 which connects to the computing device via the MCU 686. In some embodiments, the 3D printing software allows the user to choose the orientation of the object to be fabricated relative to the stage 626. The MCU 686, may also connect to the stepper motor 622 which actuates the printer frame 620 to raise or lower the stage 626 relative to the fluid reservoir 631.

**In** some embodiments, the MCU 686 connects the computing device to the controller 689 of the stereolithography apparatus (SLA). In some embodiments, the SLA controller 689 sends positioning data and a clocking pulse to the one or more scanning mirrors (SM) or galvanometers 616 to position the SM, manipulating light from the light source 612 to raster the pattern of the two-dimensional cross-section for the 3D object being fabricated. In some embodiments, an analog SM control is provided, wherein the analog control converts the digital signal from the digital controller 689 prior to sending the signal to the SM616.

**In** some embodiments, the light projector 610 further comprises a collimating optical system comprised of one or more optical lenses to further collimate light from the light source 612 onto the SM 616. In some embodiments, the light projector 610 further comprises a focal optical system comprised of one or more optical lenses to focus the laser beam emitted by the onto an incident plane 677.

**In** some embodiments, the incident plane 677 is provided within in fluid reservoir 631 such that the light pattern representing a two-dimensional cross-section of the object being fabricated is incident on unpolymerized material 671 provided within the fluid reservoir. Upon exposure to the laser beam, the photopolymerizable material begins cross-linking and solidifying to form a layer of the 3D object being fabricated as the beam is rastered across the incident plane. In some embodiments, after completion of a cross-sectional layer, the MCU 686 outputs a signal to the stepper motor 622, such that the printer frame 620 and stage 626 are lowered. The previously polymerized layer of the 3D object being fabricated is then further submerged within the photopolymerizable material and the next cross-sectional rastered onto the incident plane 677. This process is repeated until at least a first portion of the 3D object being fabricated is formed. In some embodiments, the stage is lowered incrementally after each cross-sectional layer is formed.

### IV. PERFUSABLE STAGE

There is much to be gained by fabricating objects on a perfusable stage, which can be embodied as a conventional stage with holes that run from top to bottom and are the proper shape and in the correct location for a syringe tip to be inserted after a given fabrication sequence has completed. In such embodiments, the perfusable stage would be transferred to a compatible perfusion apparatus immediately following fabrication. By designing an object to be fabricated with and interior containing perfusable lumens and creating that object in alignment with the perfusable stage, the unpolymerized material within the object can be removed or replaced after fabrication.

A removable stage 125, 225 may be provided with one or more through holes 127, 227. The fabricated 3D object is oriented such that one or more lumens, perfusions, or passages are aligned with the one or more through holes 127, 227 provided on the removable stage. In such embodiments, the fabricated 3D object 280, is transferred to the perfusion apparatus 250 with the stage 225 still attached, as depicted in FIG. 2. In some embodiments, the stage provided a structure for better handling of the fabricated 3D object which is attached thereto. In some embodiments, the fabricated 3D object may be comprised of soft or flexible materials, and a more rigid composition of the stage may allow for better handling of the fabricated 3D object. In some embodiments, the rigidity provided by the stage 225 allows for easier passage of a syringe 254 through an aperture 227 of the stage and into a lumen of the 3D fabricated object 280. Whereas, it may be difficult to provide the syringe 254 into a lumen of a soft and/or flexible 3D fabricated object without attachment to a more ridged stage 225 having an aperture 227 in alignment with the lumen of the object 280.

In some embodiments, through holes 127, 227 provide passages for unpolymerized material to pass through the stage. In such embodiments, the apertures allow for the photopolymerizable material to fill in above the previously formed layer of the 3D object being fabricated, quicker than if no holes or perfusions are provided in the stage. This becomes especially true for photopolymerizable material of high viscosities.

In some embodiments, the one or more perfusable through holes provided in the stage have a diameter of about 1 millimeter (mm). In some embodiments, the one or more perfusable through holes provided in the stage have a diameter of about 0.05 mm to about 10 mm. In some embodiments, the one or more perfusable through holes provided in the stage have a diameter of about 0.05 mm to about 0.1 mm, about 0.05 mm to about 0.5 mm, about 0.05 mm to about 1 mm, about 0.05 mm to about 2 mm, about 0.05 mm to about 3 mm, about 0.05 mm to about 5 mm, about 0.05 mm to about 10 mm, about 0.1 mm to about 0.5 mm, about 0.1 mm to about 1 mm, about 0.1 mm to about 2 mm, about 0.1 mm to about 3 mm, about 0.1 mm to about 5 mm, about 0.1 mm to about 10 mm, about 0.5 mm to about 1 mm, about 0.5 mm to about 2 mm, about 0.5 mm to about 3 mm, about 0.5 mm to about 5 mm, about 0.5 mm to about 10 mm, about 1 mm to about 2 mm, about 1 mm to about 3 mm, about 1 mm to about 5 mm, about 1 mm to about 10 mm, about 2 mm to about 3 mm, about 2 mm to about 5 mm, about 2 mm to about 10 mm, about 3 mm to about 5 mm, about 3 mm to about 10 mm, or about 5 mm to about 10 mm. In some embodiments, the one or more perfusable through holes provided in the stage have a diameter of about 0.05 mm, about 0.1 mm, about 0.5 mm, about 1 mm, about 2 mm, about 3 mm, about 5 mm, or about 10 mm. In some embodiments, the one or more perfusable through holes provided in the stage have a diameter of at least about 0.05 mm, about 0.1 mm, about 0.5 mm, about 1 mm, about 2 mm, about 3 mm, or about 5 mm. In some embodiments, the one or more perfusable through holes provided in the stage have a diameter of at most about 0.1 mm, about 0.5 mm, about 1 mm, about 2 mm, about 3 mm, about 5 mm, or about 10 mm.

In some embodiments, the stage comprises about 1 through hole to about 20 through holes. In some embodiments, the stage comprises about 1 through hole to about 2 through holes, about 1 through hole to about 3 through holes, about 1 through hole to about 5 through holes, about 1 through hole to about 7 through holes, about 1 through hole to about 10 through holes, about 1 through hole to about 15 through holes, about 1 through hole to about 20 through holes, about 2 through holes to about 3 through holes, about 2 through holes to about 5 through holes, about 2 through holes to about 7 through holes, about 2 through holes to about 10 through holes, about 2 through holes to about 15 through holes, about 2 through holes to about 20 through holes, about 3 through holes to about 5 through holes, about 3 through holes to about 7 through holes, about 3 through holes to about 10 through holes, about 3 through holes to about 15 through holes, about 3 through holes to about 20 through holes, about 5 through holes to about 7 through holes, about 5 through holes to about 10 through holes, about 5 through holes to about 15 through holes, about 5 through holes to about 20 through holes, about 7 through holes to about 10 through holes, about 7 through holes to about 15 through holes, about 7 through holes to about 20 through holes, about 10 through holes to about 15 through holes, about 10 through holes to about 20 through holes, or about 15 through holes to about 20 through holes. In some embodiments, the stage comprises about 1 through hole, about 2 through holes, about 3 through holes, about 5 through holes, about 7 through holes, about 10 through holes, about 15 through holes, or about 20 through holes. In some embodiments, the stage comprises at least about 1 through hole, about 2 through holes, about 3 through holes, about 5 through holes, about 7 through holes, about 10 through holes, or about 15 through holes. In some embodiments, the stage comprises at most about 2 through holes, about 3 through holes, about 5 through holes, about 7 through holes, about 10 through holes, about 15 through holes, or about 20 through holes. The through holes may all be of a uniform size or may differ in size.

### V. PERFUSION APPARATUS

In some embodiments, a perfusion apparatus 250, as depicted in FIG. 2, is provided as part of the fabrication system. In some embodiments, perfusion apparatus 250 is provided with a pump 251. The pump 251 may have one or more reservoirs for retaining a solution. In some embodiments, the perfusion apparatus is configured to remove unpolymerized material from a lumen or passage of the 3D fabricated object 280. In some embodiments, the perfusion apparatus is configured to introduce a solution into the lumen or passage of the 3D fabricated object 280.

In some embodiments, the perfusion apparatus is provided with an inlet conduit 253 for introducing a solution to the fabricated object 280. In some embodiments, the terminal end of the inlet conduit 253 is provided with an inlet syringe 254 to facilitate insertion into a lumen or passage of the fabricated object 280. In some embodiments, the inlet syringe passes through and aperture provided in the stage 225 prior to entering an aperture of a lumen or passage of the fabricated object 280.

In some embodiments, the perfusion apparatus is provided with an outlet conduit 257 for removing a solution or unpolymerized material from the fabricated object 280. In some embodiments, the terminal end of the outlet conduit 257 is provided with an outlet syringe 256 to facilitate insertion into a lumen or passage of the fabricated object 280. In some embodiments, the outlet syringe passes through and aperture provided in the stage 225 prior to entering an aperture of a lumen or passage of the fabricated object 280.

In some embodiments, the perfusion apparatus 250 is further provided with a perfusion tray 259 for retaining one or more solutions. In some embodiments, the tray 259 is filled with a solution which facilitates removal of unpolymerized resin. In some embodiments, the tray is provided to retain solutions being pumped into the fabricated object to prevent contamination of a workspace. In some embodiments, where the fabricated object 280 is a biomimetic implant, the tray is filled with a solution to coat the implant to sterilize or to otherwise prepare the implant for insertion into a living being in need thereof.

In some embodiments, after fabrication, 3D fabricated objects having a lumen or passage can be uniformly filled with stem cells, blood, synthetic blood, cell media, cells, particles, or other desirable solutions using the perfusion apparatus 250. In some embodiments, after fabrication, channels can be uniformly filled with neural stem cells. In some embodiments, stem cell-derived cells in the channels can express a neuronal marker, such as, but not limited to, Hu or NeuN. In other embodiments, the stem cell-derived cells in the channels can express an oligodendrocyte marker, such as but not limited to, Olig2 or an astrocyte marker such as, but not limited to, GFAP. In some embodiments, the cells can express two or more of the above.

**In** some embodiments, the interior walls of a 3D fabricated object are coated with stem cells, blood, synthetic blood, cell media, cells, particles, or other desirable solutions using the perfusion apparatus. In some embodiments, the exterior walls of a 3D fabricated object are coated with stem cells, blood, synthetic blood, cell media, cells, particles, or other desirable solutions using the perfusion apparatus.

### VI. PRINT SEQUENCE

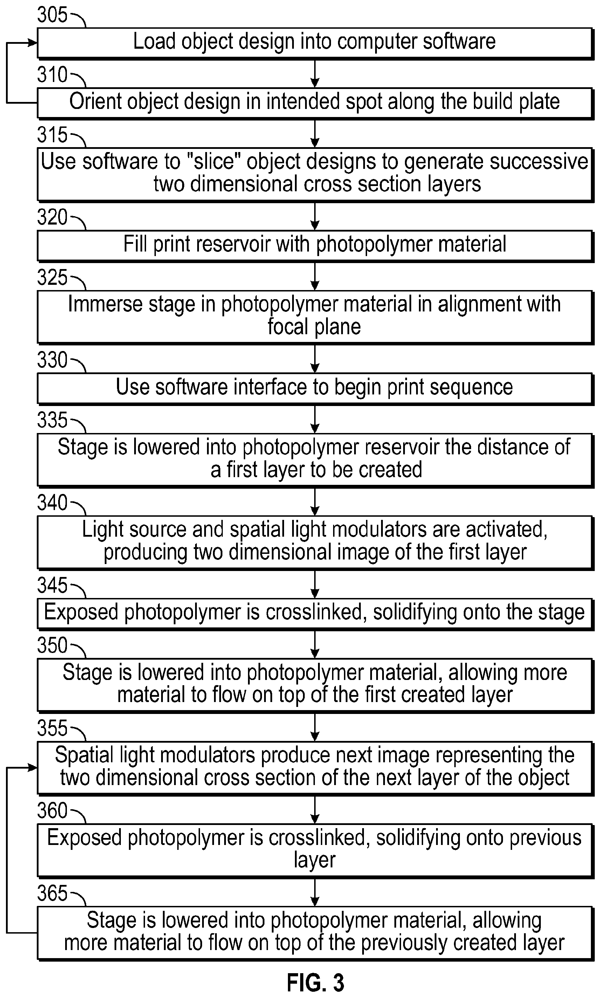

With reference to FIG. 3, an example print sequence is depicted by the flow chart. In some embodiments, a print sequence is initiated at step 306 as a 3D object design is loaded into a corresponding software of the fabrication system. In some embodiments, the 3D object is then oriented relative to the stage or build plate at step 310. The orientation may be selected for ease of manufacturing process, such as to eliminate excess material or provide a stable base by choosing a surface of the 3D object to be built against the stage. In some embodiments, the software then divides the 3D into multiple two dimensional cross-sections or slices at step 316. In some embodiments, the cross-sections are oriented in planes parallel to the stage or build plate.

**In** some embodiments, at step 320, the fluid reservoir or print reservoir is filled with a selected photopolymer material. At step 325, the stage or build plate may then be fully or partially immersed into the photopolymer material, and at step 330 the print sequence may be initiated. In some embodiments, the print sequence is initiated by a user via a software interface. In some embodiments, upon initiation of other print sequence the stage is lowered into the fluid reservoir a distance approximately equal to the thickness of the first cross-section layer to be polymerized at step 335.

In some embodiments, at step 340, the light source and spatial light modulators are then activated to project a two-dimensional cross-section image of the first layer of the 3D object. At step 340, the photopolymer which has been exposed to the image projected by the light source is crosslinked and may solidify onto the stage. In some embodiments, after the first layer of the 3D object is produced onto the stage, the stage is then lowered further into the photopolymer material being held in the fluid reservoir, at step 360, and more photopolymer material is allowed to flow on top of the first layer. At step 366, the spatial modulators produce the next cross-section image of the 3D object. The exposed photopolymer is then crosslinked and solidifies onto the previous layer at step 360. In some embodiments, at step 366, the stage is again lowered into the fluid reservoir to allow photopolymer material to flow on top of the previously created layer. In some embodiments, steps 355 to 365 are repeated until the 3D object is produced.

In some embodiments, after the initial body of the 3D object is produced, the object may then continue on to additional processing steps. In some embodiments, the photopolymer material is pumped from the reservoir, and a second photopolymer material is introduced, filling the reservoir. Similar steps, as described above, may be utilized to produce subsequent bodies of the 3D object from a new photopolymer material. In some embodiments, steps 320 to 365 are utilized to produce the subsequent bodies of the 3D object.

In some embodiments, after a first body of the 3D object is produced, the first body of the 3D object is removed from the first fluid reservoir and placed into a second fluid reservoir. The second fluid reservoir may contain a different photopolymerizable material. Similar steps, as described above, may be utilized to produce subsequent bodies of the 3D object from a new photopolymer material. In some embodiments, steps 320 to 365 are utilized to produce the subsequent bodies of the 3D object.

In some embodiments, after a first body of the 3D object is produced, the stage is removed from the actuator system. The 3D object may then continue to further processing steps, such as a perfusion sequence as described herein.

### VII. PERFUSION SEQUENCE

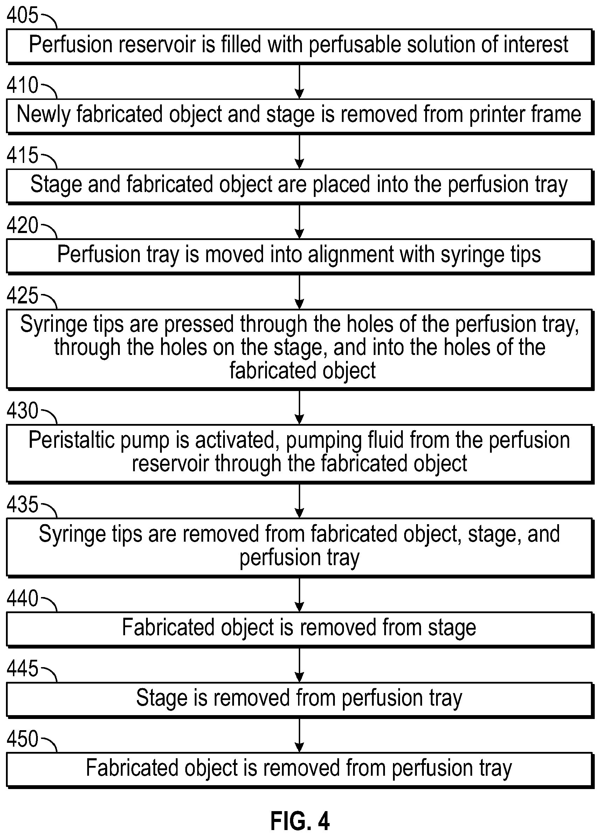

With reference to FIG. 4, an example perfusion sequence is depicted by the flow chart. The perfusion sequence may begin as the perfusion reservoir is filled with a perfusable solution at step 405. In some embodiments, the fabricated 3D object is removed from the printer frame with the stage at step 410. In some embodiments, the stage is removeable from the printer frame and the produced 3D object is attached to the stage. In some embodiments, the stage is provided with one or more perfusions which are aligned with an aperture or lumen of the 3D printed object. In some embodiments, just the 3D object is removed from the printer frame, as the 3D object is detached from the stage.

At step 415, the stage and fabricated object may be placed into a perfusable tray. At step 420, the perfusion tray is aligned with the syringe tips of the perfusion apparatus. In some embodiments, the syringe tips are then engaged into apertures provided on the perfusion tray. The syringe tips may be placed through the through-holes of the perfusion tray and through the holes of the stage to be inserted into a hole or lumen of the fabricated object at step 425. After the syringe tips are engaged with the apertures of the 3D fabricated object, the peristaltic pump may be activated at step 430. The peristaltic pump may pump fluid from the perfusable solution of interest from the perfusion reservoir through the fabricated object. In some embodiments, the perfusable solution is pumped through a lumen of the fabricate object.

After perfusion of the solution is complete, the pump may be deactivated and the syringe tips may be removed from the fabricated object, stage, and/or perfusable tray at step 435. In some embodiments, the fabricated object is removed from the stage at step 440 and the stage is removed from the perfusion tray at step 445. In some embodiments, the fabricated object is then removed from the perfusion tray at step 460.

In some embodiments, the fabricated object comprises multiple 3D components or products which are printed during a single print sequence. In such embodiments, after the stage is removed, the fabricated objects may then be removed from the perfusion tray at step 460 and the multiple components or products may be separated or divided.

### VIII. SYSTEM ENCLOSURE

In some embodiments, the entire 3D microfabrication system is encased within in a sterile fume hood. In some embodiments, the components of a sterile fume hood are directly incorporated within the body of the microfabrication system. The components of the sterile fume hood may include but not be limited to: a HEPA filter (or any other cutting edge air filtration technology), an ultraviolet light source, and a series of fans and physical geometries that guide sterile filtered air through the volume of the microfabrication system and exhaust the sterile filtered air out of the microfabrication system.

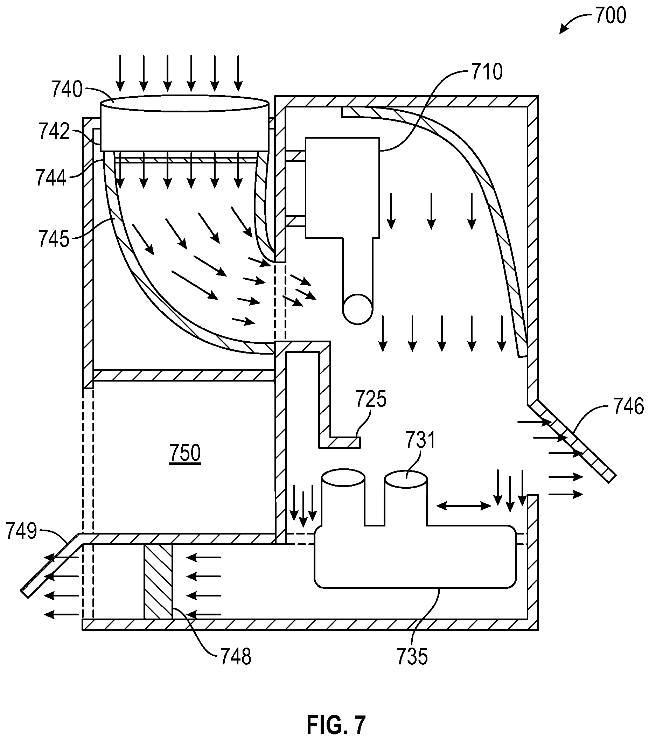

As depicted in FIG. 7, a 3D microfabrication system 700 may be provided within an enclosure comprising an air filtration system to provide a sterile environment, according to some embodiments. In some embodiments, the air filtration system comprises an intake fan 740 to draw air into the enclosure from the environment. In some embodiments, a highefficiency particulate air (HEPA) filter 742 is placed in line with the intake fan 740 to filter particulate and other contaminates from the air from the surrounding environment. In some embodiments, an ultraviolet (UV) light source 744 is provided adjacent to the intake fan 740 to eliminate pathogenic microorganisms from the airflow provided by the intake fan.

In some embodiments, the enclosure further comprises an air duct 745. In some embodiments, the air duct directs filtered air from the air filtration system and into a compartment of the enclosure which houses the projector 710, the movable stage 725, and the reservoirs 731 of the microfabrication system. In some embodiments, the filtered air then passes by the reservoirs 731 through vents provided toward the bottom of the reservoir system 735. In some embodiments, the enclosure further comprises an exhaust fan 748 to draw air out of the enclosure. In some embodiments, an additional filter maybe be provided in line with the exhaust fan to remove or neutralize fumes from the photopolymerization process. In some embodiments, the enclosure comprises a one-way vent 749 to let air exhaust from the system.

In some embodiments, the enclosure comprises a hatch or access door 746 to allow for formed products to be retrieved from within the enclosure. In some embodiments, an isolated compartment 750 is provided to house the electronics and/or computer hardware components of the system.

In some embodiments, the reservoir system 735 comprises an enclosure which houses one or more pumps connected in fluid connection with the reservoirs 731. In some embodiments, the pumps are fluidly coupled to fluid reservoirs which contain a photopolymer to be pumped into the photopolymer reservoirs 731. In some embodiments, the reservoir system 735 is configured to move the reservoirs 731, such that a plurality of products can be produced more efficiently, as disclosed herein.

In some embodiments, the reservoir system 735 contains a perfusion apparatus, as disclosed herein. In some embodiments, a perfusion apparatus is provided outside the reservoir system enclosure, within the system enclosure, such that the perfusion process takes place in a sterile environment. In some embodiments, the perfusion apparatus is provided within an enclosure separate from the enclosure containing the printing system.

The air filtration system is intended to pull air from the exterior of the microfabrication system and sterilize it to the extent that particles, germs, or other contaminants are excluded from passing through the filter based on size. The ultraviolet light source is intended to illuminate the light entering the volume of the microfabrication system with enough energy and intensity that it will destroy or render inert any contaminants that may have undesirably passed through the filter. The series of fans and physical geometries interior to the microfabrication system are intended to direct the air through the volume of the microfabrication system in an intended path that prevents any unfiltered air from entering the chamber of the microfabrication process, thus ensuring that the sterility of the created objects is not compromised. This series of fans and geometries them expels the air out of the microfabrication system from a desired location.

In some embodiments, the air filtration system provides an air flow of approximately 0.14 cubic metre per second (m^3/s). In some embodiments, the air filtration system provides an air flow of about 0.024 m^3/s to about 0.24 m^3/s. In some embodiments, the air filtration system provides an air flow of about 0.024 m^3/s to about 0.047 m^3/s, about 0.024 m^3/s to about 0.071 m^3/s, about 0.024 m^3/s to about 0.094 m^3/s, about 0.024 m^3/s to about 0.12 m^3/s, about 0.024 m^3/s to about 0.14 m^3/s, about 0.024 m^3/s to about 0.17 m^3/ s, about 0.024 m^3/s to about 0.19 m^3/s, about 0.024 m^3/s to about 0.21 m^3/s, about 0.024 m^3/s to about 0.24 m^3/s, about 0.047 m^3/s to about 0.071 m^3/s, about 0.047 m^3/s to about 0.094 m^3/s, about 0.047 m^3/s to about 0.12 m^3/s, about 0.047 m^3/s to about 0.14 m^3/s, about 0.047 m^3/s to about 0.17 m^3/s, about 0.047 m^3/s to about 0.19 m^3/s, about 0.047 m^3/s to about 0.21 m^3/s, about 0.047 m^3/s to about 0.24 m^3/s, about 0.071 m^3/s to about 0.094 m^3/s, about 0.071 m^3/s to about 0.12 m^3/s, about 0.071 m^3/s to about 0.14 m^3/s, about 0.071 m^3/s to about 0.17 m^3/s, about 0.071 m^3/s to about 0.19 m^3/s, about 0.071 m^3/s to about 0.21 m^3/s, about 0.071 m^3/s to about 0.24 m^3/s, about 0.094 m^3/s to about 0.12 m^3/s, about 0.094 m^3/s to about 0.14 m^3/s, about 0.094 m^3/s to about 0.17 m^3/s, about 0.094 m^3/s to about 0.19 m^3/s, about 0.094 m^3/s to about 0.21 m^3/s, about 0.094 m^3/s to about 0.24 m^3/s, about 0.12 m^3/s to about 0.14 m^3/s, about 0.12 m^3/s to about 0.17 m^3/s, about 0.12 m^3/s to about 0.19 m^3/s, about 0.12 m^3/s to about 0.21 m^3/s, about 0.12 m^3/s to about 0.24 m^3/s, about 0.14 m^3/s to about 0.17m^3/s, 0.14 m^3/s to about 0.19 m^3/s, about 0.14 m^3/s to about 0.21 m^3/s, about 0.14 m^3/s to about 0.24 m^3/s, about 0.17 m^3/s to about 0.19 m^3/s, about 0.17 m^3/s to about 0.21 m^3/s, about 0.17 m^3/s to about 0.24 m^3/s, about 0.19 m^3/s to about 0.21 m^3/s, about 0.19 m^3/s to about 0.24 m^3/s, or about 0.2m^3/s to about 0.2m^3/s. In some embodiments, the air filtration system provides an air flow of about 0.024 m^3/s, about 0.047 m^3/s, about 0.071 m^3/s, about 0.094 m^3/s, about 0.12 m^3/s, about 0.14 m^3/s, about 0.17 m^3/s, about 0.19 m^3/s, about 0.21 m^3/s, or about 0.24 m^3/s. In some embodiments, the air filtration system provides an air flow of at least about 0.024 m^3/s, about 0.047 m^3/s, about 0.071 m^3/s, about 0.094 m^3/s, about 0.12 m^3/s, about 0.14 m^3/s, about 0.17 m^3/s, about 0.19 m^3/s, or about 0.21 m^3/s. In some embodiments, the air filtration system provides an air flow of at most about 0.047 m^3/s, about 0.071 m^3/s, about 0.094 m^3/s, about 0.12 m^3/s, about 0.14 m^3/s, about 0.17 m^3/s, about 0.19 m^3/s, about 0.21 0.047 m^3/s, about 0.071 m^3/s, about 0.094 m^3/s, about 0.12 m^3/s, about 0.14 m^3/s, about 0.17 m^3/s, about 0.19 m^3/s, 0.21 m^3/s, or about 0.24 m^3/s.

In some embodiments, the air filtration system provides a clean environment to meet an ISO cleanroom classification guidelines. In some embodiments, the air filtration system provides an environment having a cleanroom class of 1 ISO to 9 ISO. In some embodiments, the air filtration system provides an environment having a cleanroom class of 1 ISO to 2 ISO, 1 ISO to 3 ISO, 1 ISO to 4 ISO, 1 ISO to 5 ISO, 1 ISO to 6 ISO, 1 ISO to 7 ISO, 1 ISO to 8 ISO, 1 ISO to 9 ISO, 2 ISO to 3 ISO, 2 ISO to 4 ISO, 2 ISO to 5 ISO, 2 ISO to 6 ISO, 2 ISO to 7 ISO, 2 ISO to 8 ISO, 2 ISO to 9 ISO, 3 ISO to 4 ISO, 3 ISO to 5 ISO, 3 ISO to 6 ISO, 3 ISO to 7 ISO, 3 ISO to 8 ISO, 3 ISO to 9 ISO, 4 ISO to 5 ISO, 4 ISO to 6 ISO, 4 ISO to 7 ISO, 4 ISO to 8 ISO, 4 ISO to 9 ISO, 5 ISO to 6 ISO, 5 ISO to 7 ISO, 5 ISO to 8 ISO, 5 ISO to 9 ISO, 6 ISO to 7 ISO, 6 ISO to 8 ISO, 6 ISO to 9 ISO, 7 ISO to 8 ISO, 7 ISO to 9 ISO, or 8 ISO to 9 ISO. In some embodiments, the air filtration system provides an environment having a cleanroom class of 1 ISO, 2 ISO, 3 ISO, 4 ISO, 5 ISO, 6 ISO, 7 ISO, 8 ISO, or 9 ISO. In some embodiments, the air filtration system provides an environment having a cleanroom class of at least 1 ISO, 2 ISO, 3 ISO, 4 ISO, 5 ISO, 6 ISO, 7 ISO, or 8 ISO. In some embodiments, the air filtration system provides an environment having a cleanroom class of at most 2 ISO, 3 ISO, 4 ISO, 5 ISO, 6 ISO, 7 ISO, 8 ISO, or 9 ISO.

### IX. DEFINITIONS

Unless defined otherwise, all terms of art, notations and other technical and scientific terms or terminology used herein are intended to have the same meaning as is commonly understood by one of ordinary skill in the art to which the claimed subject matter pertains. In some cases, terms with commonly understood meanings are defined herein for clarity and/or for ready reference, and the inclusion of such definitions herein should not necessarily be construed to represent a substantial difference over what is generally understood in the art.

Throughout this application, various embodiments may be presented in a range format. It should be understood that the description in range format is merely for convenience and brevity and should not be construed as an inflexible limitation on the scope of the disclosure. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 6, from 2 to 4, from 2 to 6, from 3 to 6 etc., as well as individual numbers within that range, for example, 1, 2, 3, 4, 6, and 6. This applies regardless of the breadth of the range.

As used in the specification and claims, the singular forms "a", "an" and "the" include plural references unless the context clearly dictates otherwise. For example, the term "a sample" includes a plurality of samples, including mixtures thereof.

As used herein, the term "about" a number refers to that number plus or minus 10% of that number. The term "about" a range refers to that range minus 10% of its lowest value and plus 10% of its greatest value.

The section headings used herein are for organizational purposes only and are not to be construed as limiting the subject matter described.

While preferred embodiments of the present invention have been shown and described herein, it will be obvious to those skilled in the art that such embodiments are provided by way of example only.

## Claims

1. An additive manufacturing system for forming a three-dimensional object comprising one or more perfusable lumens provided in an interior of the three-dimensional object, the system comprising:
a fluid reservoir to contain a photopolymerizable material;
a stage (125) submersible within the fluid reservoir (131), wherein the stage (125) comprises holes that run from top to bottom and are the proper shape and in the correct location for a syringe tip to be inserted after a given fabrication sequence has completed, the holes configured to align with the one or more perfusable lumens, the syringe tip configured to pass through the holes and the one or more perfusable lumens;
at least one light source to photopolymerize the photopolymerizable material;
one or more spatial light modulators disposed along an optical path of the at least one light source, the one or more spatial light modulators to project a sequence of two dimensional cross-sections of the three-dimensional object by modulating light from the at least one light source; and
a programmable controller for coordinating projection of the sequence of two dimensional cross-sections and movement of the stage to form the three-dimensional object,
wherein the fluid reservoir comprises a plurality of subreservoirs (231, 233),
wherein each of the subreservoirs (231, 233) is coupled to a pump system.

2. The system of claim 1, further comprising a plurality of optics to focus the two dimensional cross-sections onto an optical plane.

3. The system of claim 1, wherein the one or more spatial light modulators comprise one or more digital micro mirror devices, or one or more liquid crystal devices.

4. The system of any one of claims 1-3, wherein the at least one light source comprises a light emitting diode, or a laser.

5. The system of claim 4, wherein the stage is configured to move continuously.

6. The system of claim 4, wherein, when the at least one light source comprises a laser, the laser is rastered across a plane of the photopolymerizable material coincident with a focal plane of the laser.

7. The system of claim 6, wherein the stage is configured to move incrementally.

8. The system of claim 1, further comprising an enclosure to house at least the fluid reservoir and the stage.

9. The system of claim 8, wherein the enclosure comprises an air filtration system, wherein the enclosure and the air filtration system are configured to provide a sterile environment for formation of the three-dimensional object.

10. The system of claim 1, further comprising a perfusion apparatus comprising a pump, wherein the perfusion apparatus is configured to pump the photopolymerizable material through the three-dimensional object.

11. The system of claim 1, wherein the system comprises the pump system, wherein the pump system is configured to fill the fluid reservoir with the photopolymerizable material and remove unpolymerized material from the fluid reservoir.

12. The system of claim 1, wherein the plurality of subreservoirs comprises a first subreservoir and a second subreservoir, wherein the first subreservoir contains a first photopolymerizable material and the second subreservoir contains a second photopolymerizable material, and wherein at least one of the first photopolymerizable material and the second photopolymerizable material comprises a photoinitiator that triggers polymerization when illuminated by the light source.

13. The system of claim 12, wherein at least one of the first photopolymerizable material and the second photopolymerizable material comprises a quenching component, wherein the quenching component reduces the signal from the light source to prevent over-curing or unintended curing in areas not directly intended to be illuminated.

## Patentansprüche

1. Additives Fertigungssystem zum Ausbilden eines dreidimensionalen Objekts, umfassend ein oder mehrere perfundierbare Lumen, die in einem Inneren des dreidimensionalen Objekts bereitgestellt sind, wobei das System Folgendes umfasst:
ein Fluidreservoir zur Aufnahme eines photopolymerisierbaren Materials;
einen Objekttisch (125), der in das Fluidreservoir (131) eintauchbar ist, wobei der Objekttisch (125) Löcher umfasst, die von oben nach unten verlaufen und die geeignete Form und korrekte Position aufweisen, damit ein Spritzenansatz eingeführt werden kann, nachdem eine gegebene Fertigungsabfolge beendet wurde, wobei die Löcher ausgelegt sind, um fluchtend mit dem einen oder den mehreren perfundierbaren Lumen ausgerichtet zu sein, wobei der Spritzenansatz ausgelegt ist, um sich durch die Löcher und das eine oder die mehreren perfundierbaren Lumen hindurch zu erstrecken;
zumindest eine Lichtquelle, um das photopolymerisierbare Material zu photopolymerisieren;
einen oder mehrere Raumlichtmodulatoren, die entlang eines optischen Pfads der zumindest einen Lichtquelle angeordnet sind, wobei der eine oder die mehreren Raumlichtmodulatoren eine Abfolge von zweidimensionalen Querschnitten des dreidimensionalen Objekts durch Modulieren von Licht aus der zumindest einen Lichtquelle projizieren; und
eine programmierbare Steuerung zum Koordinieren der Projektion der Abfolge von zweidimensionalen Querschnitten und der Bewegung des Objekttisches zum Ausbilden des dreidimensionalen Objekts,
wobei das Fluidreservoir eine Vielzahl von Teilreservoirs (231, 233) umfasst, wobei jedes der Teilreservoirs (231, 233) mit einem Pumpensystem gekoppelt ist.

2. System nach Anspruch 1, ferner umfassend eine Vielzahl von Optiken, um die zweidimensionalen Querschnitte auf eine optische Ebene zu fokussieren.

3. System nach Anspruch 1, wobei der eine oder die mehreren Raumlichtmodulatoren eine oder mehrere digitale Mikrospiegelvorrichtungen oder eine oder mehrere Flüssigkristallvorrichtungen umfassen.

4. System nach einem der Ansprüche 1 bis 3, wobei die zumindest eine Lichtquelle eine Leuchtdiode oder einen Laser umfasst.

5. System nach Anspruch 4, wobei der Objekttisch ausgelegt ist, um sich kontinuierlich zu bewegen.

6. System nach Anspruch 4, wobei, wenn die zumindest eine Lichtquelle einen Laser umfasst, der Laser über eine Ebene des photopolymerisierbaren Materials, die mit einer Brennebene des Lasers zusammenfällt, gerastert wird.

7. System nach Anspruch 6, wobei der Objekttisch ausgelegt ist, um sich schrittweise zu bewegen.

8. System nach Anspruch 1, ferner umfassend ein Gehäuse, um das zumindest eine Fluidreservoir und den Objekttisch aufzunehmen.

9. System nach Anspruch 8, wobei das Gehäuse ein Luftfiltersystem umfasst, wobei das Gehäuse und das Luftfiltersystem ausgelegt sind, um eine sterile Umgebung zum Ausbilden des dreidimensionalen Objekts bereitzustellen.

10. System nach Anspruch 1, ferner umfassend eine Perfusionsvorrichtung, umfassend eine Pumpe, wobei die Perfusionsvorrichtung ausgelegt ist, um das photopolymerisierbare Material durch das dreidimensionale Objekt zu pumpen.

11. System nach Anspruch 1, wobei das System das Pumpsystem umfasst, wobei das Pumpsystem ausgelegt ist, um das Fluidreservoir mit dem photopolymerisierbaren Material zu füllen und nichtpolymerisiertes Material aus dem Fluidreservoir zu entfernen.

12. System nach Anspruch 1, wobei die Vielzahl von Teilreservoirs ein erstes Teilreservoir und ein zweites Teilreservoir umfasst, wobei das erste Teilreservoir ein erstes photopolymerisierbares Material enthält und das zweite Teilreservoir ein zweites photopolymerisierbares Material enthält, und wobei zumindest eines aus dem ersten photopolymerisierbaren Material und dem zweiten photopolymerisierbaren Material einen Photoinitiator umfasst, der die Polymerisation auslöst, wenn er durch die Lichtquelle bestrahlt wird.

13. System nach Anspruch 12, wobei zumindest eines aus dem ersten photopolymerisierbaren Material und dem zweiten photopolymerisierbaren Material eine Fluoreszenz-Löschungskomponente umfasst, wobei die Fluoreszenz-Lösungskomponente das Signal von der Lichtquelle reduziert, um ein Überhärten oder ungewolltes Härten in Bereichen, die nicht direkt zu bestrahlen sind, zu verhindern.

## Revendications

1. Système de fabrication additive pour former un objet tridimensionnel comprenant une ou plusieurs lumières perfusables prévues à l'intérieur de l'objet tridimensionnel, le système comprenant :
un réservoir de fluide destiné à contenir un matériau photopolymérisable ;
une platine (125) submersible à l'intérieur du réservoir de fluide (131), dans lequel la platine (125) comprend des trous qui s'étendent de haut en bas et présentent la forme et l'emplacement appropriés pour qu'une pointe de seringue soit insérée après qu'une séquence de fabrication donnée soit terminée, les trous étant configurés pour s'aligner avec les une ou plusieurs lumières perfusables, la pointe de seringue étant configurée pour passer à travers les trous et les une ou plusieurs lumières perfusables ;
au moins une source de lumière pour photopolymériser le matériau photopolymérisable ;
un ou plusieurs modulateurs de lumière spatiaux disposés le long d'un trajet optique de la au moins une source de lumière, les un ou plusieurs modulateurs de lumière spatiaux étant destinés à projeter une séquence de deux sections transversales bidimensionnelles de l'objet tridimensionnel en modulant la lumière provenant de la au moins une source de lumière ; et
un dispositif de commande programmable pour coordonner une projection de la séquence de deux sections transversales bidimensionnelles et un déplacement de la platine pour former l'objet tridimensionnel,
dans lequel le réservoir de fluide comprend une pluralité de sous-réservoirs (231, 233),
dans lequel chacun des sous-réservoirs (231, 233) est couplé à un système de pompe.

2. Système selon la revendication 1, comprenant en outre une pluralité d'optiques pour focaliser les deux sections transversales bidimensionnelles sur un plan optique.

3. Système selon la revendication 1, dans lequel les un ou plusieurs modulateurs de lumière spatiaux comprennent un ou plusieurs dispositifs à micro-miroirs numériques, ou un ou plusieurs dispositifs à cristaux liquides.

4. Système selon l'une quelconque des revendications 1 à 3, dans lequel la au moins une source de lumière comprend une diode électroluminescente, ou un laser.

5. Système selon la revendication 4, dans lequel la platine est configurée pour se déplacer en continu.

6. Système selon la revendication 4, dans lequel lorsque la au moins une source de lumière comprend un laser, le laser est tramé à travers un plan du matériau photopolymérisable coïncidant avec un plan focal du laser.

7. Système selon la revendication 6, dans lequel la platine est configurée pour se déplacer de manière incrémentielle.

8. Système selon la revendication 1, comprenant en outre une enceinte pour loger au moins le réservoir de fluide et la platine.

9. Système selon la revendication 8, dans lequel l'enceinte comprend un système de filtration d'air, dans lequel l'enceinte et le système de filtration d'air sont configurés pour fournir un environnement stérile pour la formation de l'objet tridimensionnel.

10. Système selon la revendication 1, comprenant en outre un appareil de perfusion comprenant une pompe, dans lequel l'appareil de perfusion est configuré pour pomper le matériau photopolymérisable à travers l'objet tridimensionnel.

11. Système selon la revendication 1, dans lequel le système comprend le système de pompe, dans lequel le système de pompe est configuré pour remplir le réservoir de fluide avec le matériau photopolymérisable et retirer le matériau non polymérisé à partir du réservoir de fluide.

12. Système selon la revendication 1, dans lequel la pluralité de sous-réservoirs comprend un premier sous-réservoir et un second sous-réservoir, dans lequel le premier sous-réservoir contient un premier matériau photopolymérisable et le second sous-réservoir contient un second matériau photopolymérisable, et dans lequel au moins l'un du premier matériau photopolymérisable et du second matériau photopolymérisable comprend un photo-initiateur qui déclenche une polymérisation lorsqu'il est éclairé par la source de lumière.

13. Système selon la revendication 12, dans lequel au moins un parmi le premier matériau photopolymérisable et le second matériau photopolymérisable comprend un composant de trempe, dans lequel le composant de trempe réduit le signal provenant de la source de lumière pour empêcher un durcissement excessif ou un durcissement involontaire dans des zones qui ne sont pas directement destinées à être éclairées.
